# Europäisches Patentamt
## European Patent Office
### Office européen des brevets

(19)

(11) Veröffentlichungsnummer: **0 209 672**
**B1**

(12) **EUROPÄISCHE PATENTSCHRIFT**

(45) Veröffentlichungstag der Patentschrift:
24.05.89

(51) Int. Cl.⁴: **C 04 B 37/00**

(21) Anmeldenummer: 86107069.6

(22) Anmeldetag: 23.05.86

(54) Verfahren zum Verbinden von Siliciumcarbid-Formteilen.

(30) Priorität: 24.05.85 DE 3518710
14.04.86 DE 3612458

(43) Veröffentlichungstag der Anmeldung:
28.01.87 Patentblatt 87/5

(45) Bekanntmachung des Hinweises auf die Patenterteilung:
24.05.89 Patentblatt 89/21

(84) Benannte Vertragsstaaten:
CH DE FR GB IT LI

(56) Entgegenhaltungen:
EP-A- 0 100 835
DE-A- 2 145 113
DE-A- 3 003 186

CHEMICAL ABSTRACTS, Band 103, Nr. 4, 29. Juli 1985,
Seite 226, Spalte 2 - Seite 227, Spalte 1,
Zusammenfassung Nr. 26095e, Columbus, Ohio, US;
R.HAYAMI: "Joining of new ceramics"
CHEMICAL ABSTRACTS, Band 103, Nr. 4, 29. Juli 1985,
Seite 234, Spalte 1, Zusammenfassung Nr. 26200k,
Columbus, Ohio, US
CHEMICAL ABSTRACTS, Band 101, Nr. 10, 3. September
1984, Seite 303, Spalte 1, Zusammenfassung Nr. 77686q,
Columbus, Ohio, US

(73) Patentinhaber: **Kernforschungsanlage Jülich
Gesellschaft mit beschränkter Haftung, Postfach 1913,
D-5170 Jülich 1 (DE)**

(72) Erfinder: **Gyarmati, Ernö, Dr.**, Kopernikusstrasse 14,
**D-5170 Jülich (DE)**
Erfinder: **Naoumidis, Aristides, Dr.**, Kreisbahnstrasse 30,
**D-5170 Jülich (DE)**

## Beschreibung

Die Erfindung bezieht sich auf ein Verfahren zum Verbinden von Siliciumcarbid-Formteilen, bei dem die polierten, freies Element aufweisenden Paßflächen aufeinander gebracht und in inerter oder reduzierender Atmosphäre unter Preßdruck auf hohe Temperatur erhitzt werden.

Gemäß der Erfindung werden insbesondere Verbindungen zwischen Formteilen aus drucklosgesintertem Siliciumcarbid (SSiC) und/oder heißgepreßtem Siliciumcarbid (HPSiC) hergestellt. Siliciumcarbid-Konstruktionsteile werden im wesentlichen nach drei verschiedenen Verfahren hergestellt, die zu unterschiedlichem Material führen, und zwar zu:
1) infiltriertem oder reaktionsgebundenem Siliciumcarbid (SiSiC)
2) drucklosgesintertem Siliciumcarbid und
3) heißgepreßtem Siliciumcarbid.

Formteile aus infiltriertem oder reaktionsgebundenem Siliciumcarbid, die durch Silicierung entsprechender Grünkörper aus Kohlenstoff oder Kohlenstoff und Siliciumcarbid erhalten werden, enthalten 5 - 30 Gew.-% freies Silicium, das zum Verbinden von Formteilen ausgenutzt werden kann.

So werden nach der DE-OS 3 003 186 Einzelteile aus SiSiC zu einem Werkstück zusammengepaßt und durch diffundierendes freies Silicium bei Temperaturen < 1300°C unter gleichzeitiger Druckbelastung der Verbindungsfläche durch sog. Diffusionsschweißen verbunden. Gemäß EP 0 076 467 werden geschliffene und polierte Verbindungsflächen von SiSiC-Formteilen zusammengepaßt und durch Aufheizen auf 1500 - 1800°C (d.H. oberhalb des Schmelzpunktes von Silicium) miteinander verbunden. Nach beiden Verfahren erhält man dichte, bis ca. 1400°C mechanisch feste, temperaturwechselbeständige, korrosions- und oxidationsresistente Verbindungen mit einer ca. 1 µm schmalen Siliciumnaht, ggf. mit sehr feinen Siliciumcarbidausscheidungen.

Unabhängig von der Anwesenheit von freiem Silicium im Material lassen sich Siliciumcarbidbauteile durch Zusammenfügen mit Hilfe von kohlenstoff- bzw. kohlenstoff/siliciumcarbid-haltigen Kittmassen mit organischem Binder, Verkoken desselben und Infiltration von Silicium zur Umwandlung des Kohlenstoffs in Siliciumcarbid miteinander verbinden. Unterschiedliche Varianten dieses Verfahrens sind z.B. in der US-PS 2 319 323 bzw. der DE-OS 2 922 953 beschrieben. Gemäß der DE-OS 3 311 553 der Anmelderin wird dabei der Kitt bzw. Kohlenstoff nicht zwischen die Verbindungsflächen sondern in die zu diesem Zweck aufgerauhte Oberfläche derselben gebracht. Ohne irgendeinen Binder werden gemäß der US-PS 4 156 051 keramische Formteile miteinander verbunden, indem diese zunächst in einer ersten Stufe einzeln auf eine Dichte von mindestens 65% des theoretischen Wertes vorgesintert, dann zusammengefügt und schließlich bis zu einer Dichte von ca. 98% der Theorie nochmals heißgepreßt werden. Dieses Verfahren ist aufwendig, da in der zweiten Stufe nicht nur die Paßflächen belastet werden müssen.

Außerordentlich oft wurde schließlich versucht, heißgepreßtes Siliciumcarbid mit Metallen oder über Metallschichten zu verbinden. Dabei wurde stets versucht, den Unterschied im thermischen Ausdehnungskoeffizienten zwischen Siliciumcarbid und Metall entweder durch gebildete Zwischenphasen (Silicide und/oder Carbide) oder mittels SiC-Metallpulver-Gemischen mit zum Metall hin stufenweise erhöhtem Metallanteil zu überbrücken. Im Bericht BMFT-FB T 79-124 wird beispielsweise über das Verbinden von heißgepreßtem SiC mittels ebenfalls zu kompakten dünnen Schichten (100 - 500 µm) heißgepreßtem Wolfram- und Molybdänpulver berichtet. Charakteristisch für derartige Verbunde sind die aus der gebildeten Übergangszone in das SiC verlaufenden Risse sowie die hohe Porosität in dem heißgepreßten Material.

Aufgabe dieser Erfindung ist, drucklosgesinterte oder/und heißgepreßte Siliciumcarbid-Formteile durch eine gasdichte, korrosions- und oxidationsresistente, temperaturwechselbeständige, bis ca. 2200°C mechanisch stabile Fügenaht dauerhaft zu verbinden.

Diese Aufgabe wird gemäß der Erfindung durch ein Verfahren der eingangs genannten Art gelöst, das dadurch gekennzeichnet ist, daß Siliciumcarbid-Formteile aus drucklos gesintertem SiC (SSiC) oder heißgepreßtem SiC (HPSiC) miteinander verbunden werden, indem auf zumindest eine der polierten Paßflächen eine maximal 1 µm dicke Aktivierungsschicht von wenigstens einem carbid- und/oder silicid-bildenden Element aus der Gruppe Ag, Al, Au, B, Be, Co, Cr, Cu, Fe, Mg, Mn, Mo, Nb, Ni, Pd, Pt, Ta, Ti, V, W und Zr aufgebracht wird und die zusammengefügten Teile in inerter oder reduzierender Atmosphäre im Bereich von $10^{-1}$ bis $10^5$ Pa bei Temperaturen im Bereich von 800 bis 2200°C unter einem Preßdruck im Bereich von 1 bis 100 MPa miteinander verschweißt werden.

Bei diesem Verfahren wird auf eine oder beide der Verbindungsflächen von hoher Oberflächenqualität eine sehr dünne «aktivierende» abdeckende Schicht aus einem carbid- und/oder silicid-bildenden Material aufgebracht, die bei der anschließenden Fügebehandlung unter erhöhter Temperatur- und Druckanwendung praktisch verschwindet und in der Fügefläche als solche nicht mehr nachweisbar ist. Darin unterscheidet sich das erfindungsgemäße Verfahren deutlich von bekannten Verfahren, die mit fremdmaterialhaltigen Klebschichten arbeiten.

Die aktivierende Schicht aus den oben genannten Carbid- und/oder Silicidbildnern oder Mischungen bzw. Legierungen derselben wird vorzugsweise mit einer Dicke von 0,1 bis 1 µm nach irgendeinem geeigneten Verfahren auf zumindest eine Paßfläche aufgebracht, zweckmäßigerweise z.B. aufgedampft oder aufgesputtert.

Die angewandte Fügetemperatur richtet sich nach der aufgebrachten Aktivierungsschicht: für Ag, Al, Au und Mg wird sie zwischen 800 und 1200°C gewählt; für Be, Cu, Ge und Mn zwischen 1200 und 1600°C; für Co, Cr, Fe, Ni, Pd, Pt und V zwischen 1600 und 2000°C und für B, Mo, Nb, Ni, Ti, V, W und Zr zwischen 2000 und 2200°C.

Besonders bewährt haben sich Cr, Cu, Ni, Pt und/oder Pd oder Legierungen derselben als Materialien für die aktivierende Schicht, insbesondere Kupfer und Kupferlegierungen.

Die Fügebehandlung erfolgt in inerter oder reduzierender Atmosphäre insbesondere in Argon und/oder Wasserstoff. Besonders zweckmässig arbeitet man in Argon von $10^3$ bis $10^5$ Pa. Die Aufheizdauer beträgt etwa 1 bis 2 Stunden unter konstanter Druckbelastung bis zum Erreichen der Fügetemperatur, die je nach Aktivierungsmaterial und angewandtem Druck mindestens 10 Minuten aufrechterhalten wird, woran sich eine Ofenabkühlung anschliesst.

Die Fügetemperatur wird insbesondere oberhalb des Schmelzpunktes des Materials der dünnen Schicht gewählt und Temperatur, Preßdruck und Behandlungszeit werden unter Berücksichtigung des Materials der aufgebrachten $\leqslant 1\ \mu m$ dicken Schicht aufeinander abgestimmt. Dabei ist die Dauer der Hochtemperatur-Preßdruckeinwirkung umso kürzer zu wählen, je höher die Fügetemperatur liegt. In analoger Weise kann der Anpreßdruck umso niedriger eingestellt werden, je höher die Fügetemperatur vorgesehen ist. Günstig erscheinen eine relativ niedrige Temperatur zusammen mit einem relativ hohen Druck bzw. eine Kombination von hoher Temperatur, relativ geringem Preßdruck und verkürzter Preßdauer.

Bevorzugt werden Temperaturen im Bereich von 1500 - 1800°C, insbesondere 1550 - 1750°C und Drucke von 15 - 45 MPa, insbesondere um 25 MPa und Fügedauern zwischen 15 und 120 min, insbesondere im Bereich von 30 bis 60 min.

Nachfolgend wird die Erfindung anhand von Beispielen unter Bezugnahme auf die angefügten Zeichnungen beschrieben; es zeigen:

Fig. 1 ein Schliffbild der Naht (1000×) und

Fig. 2 und 3 den Aufteilungsplan der Körper gemäß Beispiel 2 und 3.

*Beispiel 1*

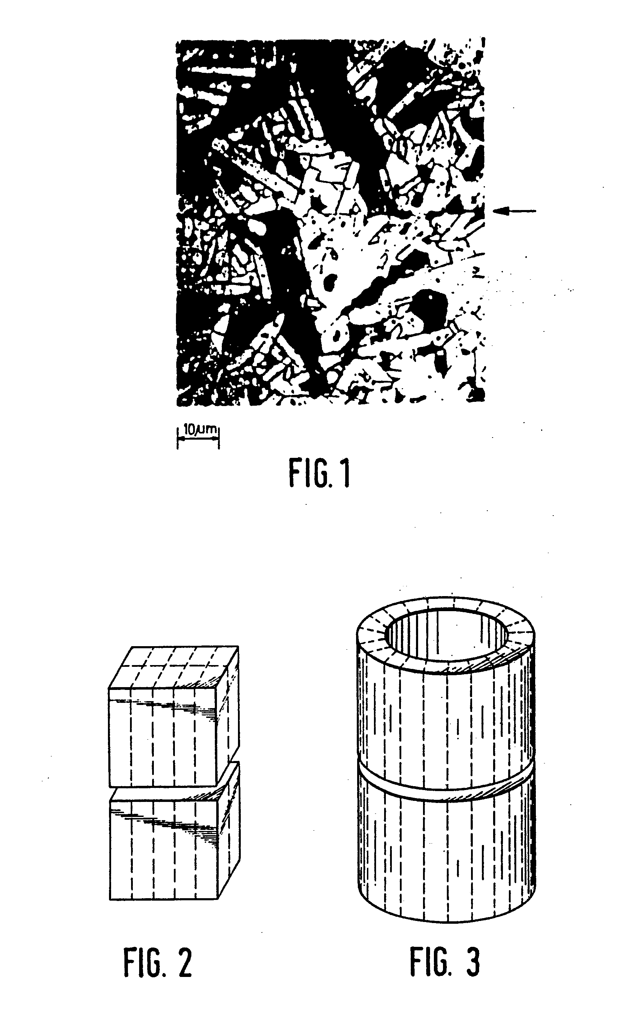

Die polierte Oberfläche einer SSiC-Scheibe mit einem Durchmesser von 20 mm und einer Höhe von 3 mm wurde durch Sputtern mit einer 0,5 μm dicken Kupferschicht versehen. Eine weitere Scheibe, ebenfalls mit einer polierten Oberfläche, wurde daraufgelegt und in einer Graphitmatrize mit Gesenk und Stempel untergebracht. Diese Anordnung wurde dann unter den Druckstempel der Heißpresse eingeführt. Der Preßraum wurde mehrmals evakuiert und mit Schweißargon belüftet. Schliesslich wurde ein Ar/H$_2$-Druck von 1 KPa eingestellt und die Probe unter einem Preßdruck von 30 MPa auf 1700°C erhitzt. Nach einer Haltezeit von 30 min wurde die Heizung langsam heruntergeregelt (durchschnittlich 20°C/min). Fig. 1 zeigt die Qualität des Schweißnahtbereiches nach Polieren und Ätzen. Mit einer Dicke von ca. 0,1 μm liegt die Schweißnaht im Dickenbereich der geätzten Korngrenze.

*Beispiel 2*

Auf eine beidseitig polierte 3 mm dicke SSiC-Scheibe von 25 × 10 mm wurde beidseits eine ca. 0,3 μm dicke Palladium-Schicht analog zu einem Druckverfahren mit einer Walze aufgetragen. Nach Abdampfen des Dispergierungsmittels wurde die Scheibe zwischen die polierten Stirnflächen zweier SSiC-Quader von je 25 × 25 × 10 mm gelegt und, wie in Beispiel 1 beschrieben, heißgepreßt. Aus der zusammengefügten Probe wurden nach dem in Fig. 2 gezeigten Plan Prüfkörper geschnitten und nach Schleifen und Polieren in einer 4-Punkt-Biegeprüfmaschine getestet. Die Biegefestigkeitswerte der einzelnen Proben lagen im gleichen Streubereich wie die des Ausgangsmaterials (bei 270 ± 20 MPa).

*Beispiel 3*

Von einem HPSiC-Rohr mit einem Außendurchmesser von 40 mm und einem Innendurchmesser von 30 mm wurde ein 3 mm dickes planparalleles Rohrstück abgeschnitten und die polierten Schnittflächen beidseitig mit einer 0,2 μm dicken Cr/Ni-Legierung vakuumbedampft. Diese «Ringscheibe» wurde dann zwischen die polierten Basisflächen von zwei 28 mm langen Rohrstücken des gleichen Materials gelegt und in analoger Weise, wie in Beispiel 1 beschrieben, bei 1800°C und einem Preßdruck von 50 MPa heißgepreßt. Das geschweißte Rohr wurde dann in einer Vakuumprüfanlage auf Dichtigkeit getestet; die Leckrate betrug $10^{-4}$ Pals$^{-1}$. Danach wurde das Rohr, wie Fig. 3 zeigt, in Rohrsegmente geschnitten und daraus durch Schleifen rechtwinklige Biegestäbchen hergestellt. Nach erfolgtem Polieren wurde die Biegefestigkeit der Proben gemessen. Sie betrug 500 ± 30 MPa und lag damit nur 4% unter derjenigen von nahtfreien Proben.

Weitere Ergebnisse, die beim Verbinden von drucklos gesintertem SiC (Oberfläche geschliffen, geläppt, gereinigt im Äthylacetat-Ultraschallbad) unter Verwendung dünner ($\leqslant 1\ \mu m$) Sputterschichten aus Kupfer, Kupferlegierungen oder Palladium erzielt wurden, sind in der nachfolgenden Tabelle zusammengefaßt.

| Versuch no. | $\leqslant 1\ \mu m$ aus | Temp. °C | Zeit min | Preßdruck MPa | Preß-Atmosphäre Pa | Biegefestigkeit MPa |
|---|---|---|---|---|---|---|
| 98 | Cu | 1550 | 60 | 15,0 | 4,0 $10^4$ | 240 ± 87 |
| 96 | Cu | 1750 | 60 | 15,0 | 4,0 $10^4$ | 200 ± 44 |
| 75 | Cu | 1750 | 60 | 24,5 | 2,7 $10^3$ | 211 ± 36 |
| 97 | Cu | 1750 | 30 | 15,0 | 4,0 $10^4$ | 233 ± 66 |
| 74 | Pd | 1750 | 60 | 24,5 | 2,7 $10^3$ | 102 ± 20 |
| 99 | Cu/Si | 1550 | 60 | 24,5 | 4,0 $10^4$ | 149 ± 19 |
| 101 | Cu/Pd | 1550 | 60 | 24,5 | 4,0 $10^4$ | 148 ± 32 |

Die Aufheizgeschwindigkeit lag bei 10 - 15°C/ min.

Wie die Tabelle zeigt, sind die mit Kupfer erzielten Ergebnisse besonders gut und liegen deutlich über den Werten, die mit aktivierenden Si-Mengen erzielbar sind: Die Biegefestigkeit bei Zimmertemperatur erreicht bis zu 80% der Biegefestigkeit des Grundmaterials.

**Patentansprüche**

1. Verfahren zum Verbinden von Siliciumcarbid-Formteilen, bei dem die polierten, freies Element aufweisenden Paßflächen aufeinander gebracht und in inerter oder reduzierender Atmosphäre unter Preßdruck auf hohe Temperatur erhitzt werden, dadurch gekennzeichnet, daß Siliciumcarbid-Formteile aus drucklos gesintertem SiC (SSiC) oder heißgepreßtem SiC (HPSiC) miteinander verbunden werden, indem auf zumindest eine der polierten Paßflächen eine maximal 1 μm dicke Aktivierungsschicht von wenigstens einem carbid- und/oder silicid-bildenden Element aus der Gruppe Ag, Al, Au, B, Be, Co, Cr, Cu, Fe, Mg, Mn, Mo, Nb, Ni, Pd, Pt, Ta, Ti, V, W und Zr aufgebracht wird und die zusammengefügten Teile in inerter oder reduzierender Atmosphäre im Bereich von $10^{-1}$ bis $10^5$ Pa bei Temperaturen im Bereich von 800 bis 2200°C unter einem Preßdruck im Bereich von 1 bis 100 MPa miteinander verschweißt werden.

2. Verfahren nach Anspruch 1, dadurch gekennzeichnet, daß auf zumindest eine der Paßflächen eine 0,1 bis 1 μm dicke Aktivierungsschicht aufgebracht wird.

3. Verfahren nach Anspruch 1 oder 2, dadurch gekennzeichnet, daß das carbid- und/oder silicid-bildende Material aufgedampft, aufgesputtert bzw. mit der Walze aufgetragen wird.

4. Verfahren nach Anspruch 1, dadurch gekennzeichnet, daß als carbid- und/oder silicidbildendes Material Cr, Cu, Ni, Pt und/oder Pd oder Legierungen derselben aufgebracht werden.

5. Verfahren nach Anspruch 1, dadurch gekennzeichnet, daß für die dünne Schicht Kupfer oder Kupferlegierungen verwendet werden.

6. Verfahren nach Anspruch 1, dadurch gekennzeichnet, daß die Fügetemperatur über der Schmelztemperatur des Materials der dünnen Schicht gewählt wird.

7. Verfahren nach Anspruch 1 oder 6, dadurch gekennzeichnet, daß Temperatur, Preßdruck und Behandlungszeit unter Berücksichtigung des Materials der aufgebrachten ≤ 1 μm dicken Schicht aufeinander abgestimmt werden.

8. Verfahren nach Anspruch 7, dadurch gekennzeichnet, daß der Preßdruck bei 15 bis 45 MPa, insbesondere um 25 MPa, die Temperatur zwischen 1500 und 1800°C und die Dauer der Druckeinwirkung zwischen 15 und 120 min, insbesondere im Bereich von 30 bis 60 min gewählt werden.

9. Verfahren nach einem der vorangehenden Ansprüche, dadurch gekennzeichnet, daß die Fügebehandlung in Argon bei einem Druck im Bereich von $10^3$ bis $10^5$ Pa durchgeführt wird.

**Claims**

1. Method of bonding shaped silicon carbide bodies, in which the polished fitting faces having a free element are brought together and heated to a high temperature under an applied pressure in an inert or reducing atmosphere, characterized by the fact that shaped silicon carbide bodies made of SiC sintered without pressure (SSiC) or of hot-pressed SiC (HPSiC) are bonded to one another by applying an activating layer with a maximum thickness of 1 μm made of at least one carbide- and/or silicide-forming element from the group Ag, Al, Au, B, Be, Co, Cr, Cu, Fe, Mg, Mn, Mo, Nb, Ni, Pd, Pt, Ta, Ti, V, W and Zr to at least one of the polished fitting faces and welding the combined parts to one another in an inert or reducing atmosphere in the range of $10^{-1}$ to $10^5$ Pa at temperatures in the range of 800 to 2200°C under an applied pressure in the range of 1 to 100 MPa.

2. Method according to claim 1, characterized in that an activating layer with a thickness of 0.1 to 1 μm is applied to at least one of the fitting faces.

3. Method according to claim 1 or 2, characterized in that the carbide- and/or silicide-forming material is evaporation-deposited, sputtered or applied with a roller.

4. Method according to claim 1, characterized in that Cr, Cu, Ni, Pt and/or Pd or alloys of the same are applied as the carbide- and/or silicide-forming material.

5. Method according to claim 1, characterized in that copper or copper alloys are used for the thin layer.

6. Method according to claim 1, characterized in that the jointing temperature is selected to be above the melting temperature of the material of the thin layer.

7. Method according to claim 1 or 6, characterized in that the temperature, applied pressure and treatment time are matched to one another taking into consideration the material of the applied layer of thickness ≤ 1 μm.

8. Method according to claim 7, characterized in that the applied pressure is selected at 15 to 45 MPa, especially around 25 MPa, the temperature is selected between 1500 and 1800°C, the duration of the pressure application is selected between 15 and 120 minutes, especially in the range of 30 to 60 minutes.

9. Method according to one of the preceding claims, characterized in that the treatment of the joint is carried out in argon at a pressure in the range from $10^3$ to $10^5$ Pa.

**Revendications**

1. Procédé de liaison de pièces façonnées en carbure de silicium, dans lequel les surfaces d'ajustage, polies et comportant un élément libre, sont mises l'une contre l'autre et sont portées à une température élevée, sous une pression de compression dans une atmosphère inerte ou réductrice, caractérisé en ce qu'il consiste à relier entre elles des pièces conformées de carbure de silicium constituées de SiC fritté sans pression (SSiC) ou de SiC comprimé à chaud (HPSiC), en déposant, au moins sur l'une des surfaces de contact polies, une couche d'activation de 1 μm d'épaisseur au maximum, d'au moins un élément formant un carbure et/ou un siliciure choisi dans le groupe Ag, Al, Au, B, Be, Co, Cr, Cu, Fe, Mg, Mn, Mo, Nb, Ni, Pd, Pt, Ta, Ti, V, W et Zr, et en soudant l'une à l'autre les pièces assemblées, dans une atmosphère inerte ou réductrice, dans la plage de $10^{-1}$ à $10^5$ Pa, à des températures de l'ordre de 800 à 2200°C, sous une pression de compression de 1 à 100 MPa.

2. Procédé suivant la revendication 1, caractérisé en ce qu'il consiste à déposer une couche d'activation de 0,1 à 1 μm d'épaisseur sur l'une au moins des surfaces d'ajustage.

3. Procédé suivant la revendication 1 ou 2, caractérisé en ce qu'il consiste à déposer le matériau formant le carbure et/ou le siliciure en phase vapeur, par pulvérisation cathodique ou à le déposer à l'aide d'un cylindre.

4. Procédé suivant la revendication 1, caractérisé en ce qu'il consiste à déposer comme matériau formant un carbure et/ou un siliciure, Cr, Cu, Ni, Pt et/ou Pd ou leurs alliages.

5. Procédé suivant la revendication 1, caractérisé en ce qu'il consiste à utiliser pour la couche mince du cuivre ou des alliages de cuivre.

6. Procédé suivant la revendication 1, caractérisé en ce qu'il consiste à choisir une température de jonction supérieure à la température de fusion du matériau de la couche mince.

7. Procédé suivant la revendication 1 ou 6, caractérisé en ce qu'il consiste à harmoniser la température, la pression de compression et la durée de traitement, les uns aux autres, en tenant compte du matériau de la couche mince déposé en une épaisseur $\leqslant$ 1 μm.

8. Procédé suivant la revendication 7, caractérisé en ce qu'il consiste à choisir la pression de compression entre 15 et 45 MPa, notamment à environ 25 MPa, la température entre 1500 et 1800°C, et la durée de l'action de la pression entre 15 et 120 min, notamment entre 30 et 60 min.

9. Procédé suivant l'une des revendications précédentes, caractérisé en ce qu'il consiste à effectuer le traitement de jonction dans l'argon, sous une pression comprise entre $10^3$ et $10^5$ Pa.

FIG. 1

FIG. 2

FIG. 3